# EUROPEAN PATENT SPECIFICATION

(11) **EP 1 942 604 B1**
(45) Date of publication and mention of the grant of the patent: **20.02.2013**
(21) Application number: 06828385.2
(22) Date of filing: 18.12.2006
(51) Int. Cl.: H04L 12/911, H04L 12/751, H04L 12/711, H04L 12/703, H04L 12/931

(54) **A SERVICE SWITCHING METHOD AND THE NETWORK NODE THEREOF**
VERFAHREN ZUR DIENSTEVERMITTLUNG UND ENTSPRECHENDER NETZKNOTEN
PROCÉDÉ DE COMMUTATION DE SERVICE ET NOEUD DE RÉSEAU ASSOCIÉ

(30) Priority: 10.05.2006 CN 200610078543
(43) Date of publication of application: 09.07.2008
(73) Proprietor: Huawei Technologies Co., Ltd., Longgang District, Shenzhen Guangdong 518129 (CN)
(72) Inventor: XU, Huiying, Shenzhen, Guangdong 518129 (CN); ZHANG, Fatai, Shenzhen, Guangdong 518129 (CN); XU, Yongliang, Shenzhen, Guangdong 518129 (CN); LUO, Xianlong, Shenzhen, Guangdong 518129 (CN)
(74) Representative: Thun, Clemens
(86) International application number: PCT/CN2006/003474
(87) International publication number: WO 2007/128176

(56) References cited:
- CN-A- 1 710 869
- US-A1- 2002 167 898
- US-A1- 2003 117 950
- US-A1- 2004 004 937
- US-B1- 6 757 258
- MARKO LUOMA: "S-38.192 Network Service Provisioning, Lecture 10, Resiliency"[Online] 12 April 2005 (2005-04-12), XP002513327 Retrieved from the Internet: URL:http://www.netlab.tkk.fi/opetus/s38192 /k2005/slides/L10_handout.pdf> [retrieved on 2009-01-30]

## Description

### Field of the Technology

The present invention relates to Automatically Switched Optical Network (ASON) technologies, and more particularly, to a method and a network node for switching a service.

### Background of the Invention

Along with the development of information technologies, particularly Internet techonlogies which effectively stimulate the growth of data services, the requirements of optical networks include: dynamically adjusting the logic topology of a network in real time, optimally utilizing resources, quickly providing for users with various high-quality services and applications of bandwidth, having better protection and restoration functions and better interoperability and expansibility. But in traditional optical networks, service scheduling is statically configured by a network manager, and services can not be dynamically activated. Further in the traditional optical networks, linear or ring networkings are widely used, and static restoration methods are utilized for protection restoration including the multiplex section protection, Sub-Network Connection Protection (SNCP) and Passage Protect (PP) etc. Therefore, the traditional optical network can not satisfy the above demand.

For the purpose of satisfying the demand of services, the International Telecommunication Unite-T sector (ITU-T), the Internet Engineering Task Force (IETF) and the Optical Internetworking Forum (OIF) jointly develop Automatically Switched Optical Network (ASON) technologies which may well solve the above problem. The ASON introduces intelligentization of switching to provide dynamic end-to-end connection which may support mesh network structures, and the size of bandwidth may be configured as required. Therefore, the survivability of the network greatly improves, expansion capacities of the network are flexible and protection restoration functions of the network are fast.

The main difference between the ASON and the traditional optical transport network includes that a control plane is introduced so as to evolve the management architecture of the traditional optical transport network into a multi-plane management architecture of a new type based on a management plane, a control plane and a transport plane. The Generalized Multi-Protocol Label Switching (GMPLS) protocol is used in the control plane, and services are established by Switched Connections (SC) and Soft Permanent Connections (SPC). By the functions of the control plane, the whole end-to-end connections or part of the end-to-end connections may be established, maintained and deleted automatically within a short time. When the working path of a service fails, the control plane, by the GMPLS signaling protocol, quickly performs a re-routing, establishs a protection path, and transmits the service via the established protection path so as to transmit the service normally. After the original working path is restored, the service may be switched from the protection path to the original working path, so that the management of the network is flexible for the operator, and the routing of network connections may change temporally and dynamically and may keep stable at most of the time. Therefore, the characteristic of service switching becomes an important feature in the ASON network.

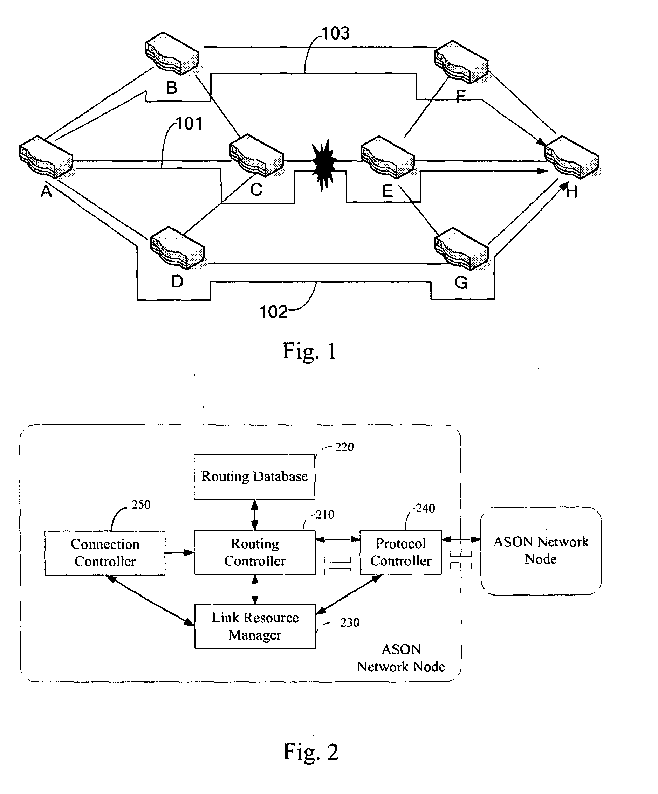

In the conventional ASON, whether the original working path is restored is determined according to alarm disappearance and Wait To Restore (WTR) time. If the original working path is restored, an operation of service switching is performed. The operation is described as follows by taking an 1 + 1 revertive protection mode as an example. As shown in Figure. 1, nodes A to H are nodes in a ASON network, and a service is transmitted between the node A and the node H via the connection of the 1 + 1 revertive protection mode. The intermediate nodes of a working path 101 are nodes C and E; the intermediate nodes of a protection path 102 are nodes D and G. When the path between the nodes C and E fails, i.e. the working path 101 fails, the node H selects the service transmitted via the protection path 102. Meanwhile, the control plane calculates a restoration path and establishes a restoration path 103 as calculated by using signaling, and the intermediate nodes of the restoration path are the nodes B and F, so that the service is transmited normally and the 1+1 protection is implemented. After the failure between the nodes C and E is recovered, the node C sends an alarm disappearance message to notify all head nodes of connections including the link that the failure is recovered, i.e. notifiy the head node A of the working path 101 in Figure 1 that the failure is recovered. After waiting for a WTR time, the node A switches the service from the protection path 102 back to the original working path 101 and delets the restoration path 103. The WTR time is set for preventing frequent switchings of the service between the working path 101 and the restoration path 103 caused by the instability of the working path.

US 2003/0117950 discloses a method for switching a service from a backup path to a recovered original working path when a head end node of the backup path receives an acknowledgement of a Label Restore Abort Request message from the tail end node of the backup path, comprises: a head end node of the backup bath receives a Link Recovery Notification message, in responding to the message, sets a Wait-to-Restore timer; upon expiration of the Wait-to-Restore timer, the head end node may send a Link Label Restore Request message over the recovered path to the tail end node and send a Link Label Restore Abort Request message to the tail end node upon receiving an acknowledgement of the Label Restore Abort Request message from the tail end node; finally, the head end node may switch the service from the backup bath to the recovered bath.

US 2002/0167898 discloses a method for switching a service from an original working path to a backup path in the event of a link failure occurred in an IP network, comprises: pre-calculating for the network a minimum number of spanning trees arranged to provide alternative paths if the communication between two routers is broken, providing routing tables based on the spanning trees and switching to the new routing tables when a link failure is detected.

However, the inventor, through in-depth researches, finds that by using the service switching of the conventional mode, if the number of connections including a link is large, a great number of alarm messages may be caused when the link fails, and a great deal of information is transmitted. Further, by using the service switching of the conventional mode, when parts of sources are shared by a protection path and an original working path, the revertive processing can not be implemented. For example, if the protection of a link transmitting a serivice is a multiplex-section protection, when the failure of the link is recovered, whether the service switching needs to be performed can not be determined only according to the alarm disappearance.

### Summary of the Invention

The present invention provides embodiments of a method for switching a service so as to switch a service independent of alarm messages. The embodiments may be used in networks in which a service switches to a protection path when a working path fails, and the method includes the following processes:
determining whether the working path is restored when an end node of the service detects a change in topology of an Automatic Switched Optical Network, ASON, by updating a Routing message Data Base, RDB, on receipt of flooding information of the Open Shortest Path First-Traffic Engineering, OSPF-TE, protocol and determining that the topology of the network changes when contents of the RDB change; and switching the service from the protection path back to the working path when the working path is restored, otherwise terminating the method.

The end node of the service is the head node or the tail node of the working path.

Before the service is switched to the protection path, the method further includes: configuring the protection path, the end nodes of the protection path being the end nodes of the working path;
after switching the service from the protection path back to the working path, the method further includes: deleting connections of the protection path, the connections being separate from the working path.

After the service is switched to the protection path, the method further includes: establishing a restoration path, the end nodes of the restoration path being the end nodes of the working path.

After switching the service from the protection path back to the working path, the method further includes: deleting connections of the restoration path, the connections being separate from the working path.

Before switching the service from the protection path back to the working path, the method further includes: configuring a wait to restore timer in the end node; determining whether the working path fails before the wait to restore timer expires; if yes, terminating the method; otherwise, performing the subsequent processes.

The present invention also provides embodiments of a network node including a route controller, a link resource manager and a connection controller. The network node further includes a path testing unit, configured to determine whether a working path in a network is restored after the link resource manager inform a change in topology of the network, the network node being an end node of the working path; and send a signal to the route controller if the working path is restored.

The route controller is configured to send a trigger signal according to the received signal, the connection controller switching the service from the protecting path back to the working path according to the trigger signal.

The link resource manager is configured to detect the change in the topology of a network by updating a Routing message Data Base, RDB, on receipt of flooding information of the Open Shortest Path First-Traffic Engineering, OSPF-TE, protocol and determining that the topology of the network changes when contents of the RDB change.

Preferably, the network node further includes a wait to restore timer.

The path testing unit is further configured to start the wait to restore timer before sending the signal, determine whether the working path fails before the wait to restore timer expires, and send the signal or stop the wait to restore timer if the working path does not fail.

At least one of the path detecting unit and the timer is located at the route controller.

The network node is a network node of an Automatically Switched Optical Network, ASON.

It can be seen from the above solution that in the embodiments of the present invention, the service switching is triggered according to the change in topology of the network instead of the alarm disappearance. Therefore, the spread of alarm messages decreases. Moreover, by using the embodiment of the present invention, the revertive processing is implemented when parts of sources are shared by a protection path and an original working path.

### Brief Description of the Drawings

Figure 1 is a schematic diagram illustrating a network of a 1 + 1 protection mode in which the link of a working path and that of a restoration path are independent.
Figure 2 is a schematic diagram illustrating a structure of a conventional network node.
Figure 3 is a flowchart illustrating a method for switching a service in accordance with an embodiment of the present invention.
Figure 4 is a schematic diagram illustrating a network of the 1+1 protection mode in which part of links are shared by a restoration path and a working path.
Figure 5 is a flowchart illustrating a method for switching a service in accordance with another embodiment of the present invention.
Figure 6 is a schematic diagram illustrating a network including working paths without protection in accordance with another embodiment of the present invention.
Figure 7 is a schematic diagram illustrating a structure of an ASON network node in accordance with another embodiment of the present invention.

### Detailed Description of the Invention

In the embodiments of the present invention, the characteristics of routing technologies in the ASON are used adequately. Before solutions in the embodiments of the present invention are described in detail, the routing technologies in the ASON are described briefly.

Figure 2 shows a schematic diagram illustrating the structure of a node in the ASON, and the node includes as follows.

Routing Controller (RC) 210 is configured to respond to the request for channel or routing information which is sent by a connection controller for establishing a connection. Routing Controller 210 is also configured to exchange routing information with peer Routing Controllers, and answer the inquiry of routing information after inquiring Routing Data Base (RDB) 220. Routing Controller 210 is further configured to send topology information required for managing the network, and the topology information includes Sub Network Points (SNPs) and the attribute of the SNPs.

Routing Data Base (RDB) 220 is configured to provide Route Controller 210 with the routing information, and the routing information may include local topology, network topology, accessibility, routing strategy configuration and other information acquired by exchanging the routing information. Routing Data Base 220 may include routing information of multiple routing domains.

Link Resource Manager (LRM) 230 is configured to provide Routing Controller 210 with routing information of all SNP Pool (SNPP), and inform Routing Controller 210 about any changes in states of link resources controlled by Link Resource Manager 230.

Protocol Controller (PC) 240 is configured to convert a routing primitive into a message of a specific routing protocol, and Protocol Controller 240 is related to the protocol. Protocol Controller 240 is also configured to process control information related to routing protocols, and the control information is used for managing and maintaining exchange of the routing information.

Connection Controller 250 is configured to establish a connection according to the instruction from Routing Controller210.

GMPLS-based Open Shortest Path First-Traffic Extension (OSPF-TE) protocol is adopted as the routing information distribution protocol of the ASON. By the OSPF-TE protocol, a network node may quickly perceive the change in topology of the network, e.g., routing interface fails. By flooding mechanisms, the Routing Data Base of each network node is synchronized by sending the Link Status Announcement (LSA) between adjacent nodes, i.e., all network nodes have the same topology information and link information eventually. In this way, each network node may perceive the change in topology of the network.

According to the above characteristics of the routing technologies of the ASON, the embodiment of the present invention includes the following process.

When a working path M1 used for transmitting a service fails, the control plane performs a dynamic restoration and establishes a path M2, and then the service is transmitted via the path M2.

If an end node of the service perceives the change in topology of the network, the end node checks whether all the links of the original working path M1 are restored according to the routing information in a local RDB; if all the links are restored, a timer is set and the duration of the timer is the WTR time. When the timer expires, the service transmitted by the path M2 is switched back to the working path M1, and the connection of the path M2 is deleted.

The end node of the service may be the head node or the tail node of the working path M1, and may also be the head node or the tail node of the path M2.

There are two types of the established path M2:
(1) the links of M1 and M2 are separate except for the head and tail nodes;
(2) part of resources are shared by M2 and M1, i.e., part of normal connections of the original M1 are reused.

Embodiments are described as follows according to the two types.

In the first embodiment, the method for switching a service is described, and in the method, the links of a restoration path and an original working path are separate except for the head and tail nodes.

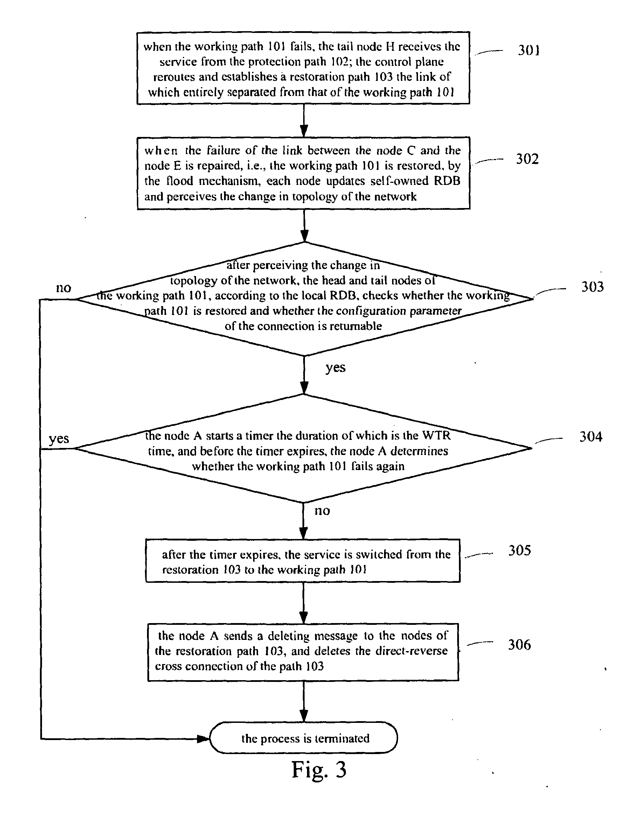

Figure 3 shows a method for switching a service in the 1+1 protection mode, and the network structure shown in Figure 1 is taken as an example. The method includes the following processes.

At block 301, when the link between the node C and the node E fails, i.e., when the working path 101 fails, the tail node H selects the service from the protection path 102. The control plane reroutes and establishes a restoration path 103, and the link of the restoration path 103 entirely separate from that of the working path 101.

At block 302, when the failure of the link between the node C and the node E is recovered, i.e., the working path 101 is restored, by the flooding mechanisms of the OSPF-TE, the route controller of each node updates self-owned RDB and perceives the change in topology of the network.

At block 303, after perceiving the change in topology of the network, the route controllers of the head and tail nodes of the working path 101, i.e., the node A and the node H, according to the local RDB, checks whether the working path 101 is restored and whether the connection is revertive; if yes, block 304 is performed; otherwise, the process is terminated.

At block 304, the node A starts a timer the duration of which is the WTR time. Before the timer expires, the node A determine whether the working path 101 fails again; if yes, the process is terminated; otherwise, block 305 is performed.

At block 305, after the timer expires, the route controller of the node A triggers a connection controller, and the service is switched from the restoration path 103 to the working path 101.

At block 306, the node A sends a deleting message (e.g., Path Tear) to the nodes on the restoration path 103 hop by hop, and deletes the direct-reverse cross connection of the path 103. The deleting may be performed according to the process of deleting connection in the standard GMPLS RSVP-TE (with reference of RFC 3473). The process is terminated after the deleting is performed.

In the second embodiment, the method for switching a service is described, and in the method, part of resources is shared by a restoration path and an original working path.

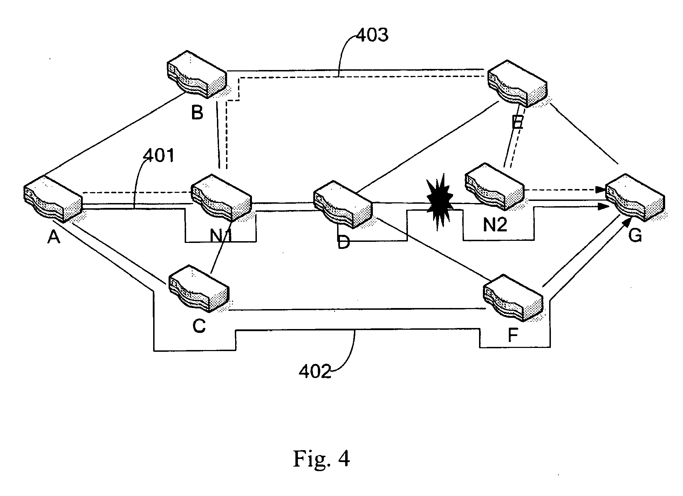

As shown in Figure 4, in the 1 + 1 protection mode, the working path 401 starts from the head node A to the tail node G through the node N1, the node D and the node N2. The intermediate nodes of the protection path include the node C and the node F. The restoration path 403 starts from the head node A to the tail node G through the node N1, the node B, the node E and the node N2. The connection resources of the working path 401 are shared by the restoration path 403, and the shared connections include the connection between the node A and the node N1 and that between the node N2 and the node G

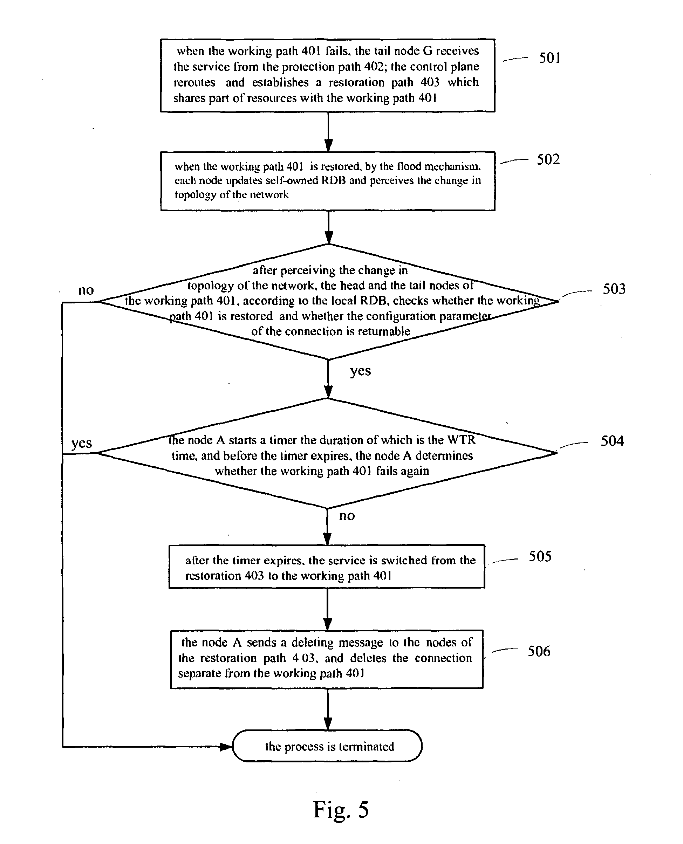

Figure 5 shows a method for switching a service, and the network structure shown in Figure 4 is taken as an example. The method includes the following processes.

At block 501, when the link between the node D and the node N2 fails, i.e., when the working path 401 fails, the tail node G selects the service from the protection path 402. The control plane reroutes, and establishes a restoration path 403 which shares parts of resources with the working path 401.

At block 502, when the failure of the link between the node D and the node N2 is recovered, i.e., the working path 401 is restored, by the flooding mechanisms of the OSPF-TE, the route controller of each node updates self-owned RDB and perceives the change in topology of the network.

At block 503, after perceiving the change in topology of the network, the route controllers of the head and the tail nodes of the working path 401, i.e., the node A and the node G, according to the local RDB, check whether the working path 401 is restored and whether the connection is revertive; if yes, block 504 is performed; otherwise, the process is terminated.

At block 504, the node A starts a timer the duration of which is the WTR time. Before the timer expires, the node A determines whether the working path 401 fails again; if yes, the process is terminated; otherwise, block 505 is performed.

At block 505, after the timer expires, the route controller of the node A triggers a connection controller, and the service is switched from the restoration path 403 to the working path 401.

At block 506, the node A sends a deleting message to the nodes of the restoration path 403, and deletes the connection separate from the working path 401, i.e., deletes the connection from the node N1 to the node B, from the node B to the node E, and from the node E to the node N2, and retains the shared connections of the working path 401, i.e., the connections from the node A to the node N1, and the node N2 to the node G. The deleting may be performed according to the process of deleting connection in the standard GMPLS RSVP-TE (with reference of RFC 3473). The process is terminated after the deleting is performed.

Each operation performed by the head node of the working path, i.e. the node A in the above blocks 504 to 506 may also be performed by the tail node of the working path, i.e., the node G.

In the third embodiment 3, the method for switching a service is described, and in the method, the working path does not have a preconfigured protection path, and a path may be configured when the working path fails.

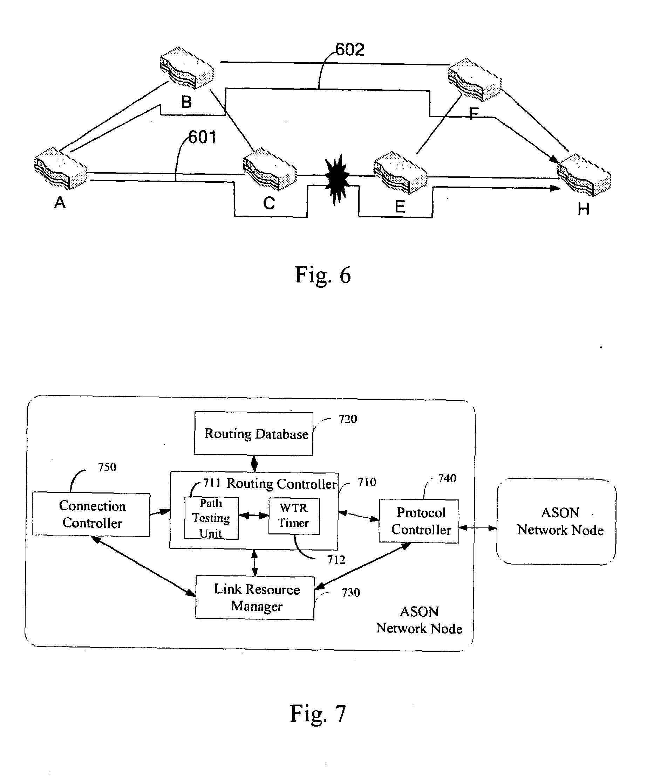

In the above two embodiments for switching the service, the working paths are in the 1 + 1 protection mode. The solution of the present invention may also be used when the working paths have no protection. As shown in Figure 6, data is transmitted from the head node A to the tail node H via the working path 601. When the link between an intermediate node C and a node E fails in the transmission, a protection path 602 is established, and then the data is transmitted via the protection path 602. If the head node A or the tail node H learns that the working path 601 is restored by perceiving the change in topology of the network, a timer is started, and the duration of the timer is the WTR time. When the timer expires, the service is switched back to the working path 601, and the protection path 602 is deleted.

In Figure 6, the protection path 602 and the working path 601 are separate from each other except for the head and tail nodes. In practice, part of connections may be shared by the protection path 602 and the working path 601. In this way, when the protection path 602 is deleted, the connections of the protection path 602 are deleted, and the connections are separate from the working path 603.

Figure 7 shows a schematic diagram of a network node for implementing the method in the embodiment of the present invention. By comparison with the conventional network node, in the embodiment of the present invention, a Path Testing Unit 711 and a WTR Timer 712 are added in the Route Controller 710 of the network node.

The Path Testing Unit 711 is configured to, when the Link Resource Manager 730 reports the change in topology of the network, determine whether a working path is restored to a normal state from a failure state before the topology of the network changes, the head node of the working path being the network node, the working path being revertive. Path Testing Unit 711 is further configured to start the WTR timer 712, and the duration of the WTR timer 712 is the WTR time.

Before the WTR Timer 712 expires, the Path Detecting Unit 711 is further configured to determine whether the working path fails again; if yes, the WTR Timer 712 is stopped.

When the WTR Timer 712 expires, the Path Detecting Unit 711 or the WTR Timer 712 sends a path-return signal to the Route Controller 710. The Route Controller 710, on receipt of the signal, triggers the process of switching the service from the protection path to the working path.

The Path Testing Unit 711 and the WTR Timer 712 may also be configured as modules in the network node, and the modules and the Route Controller 719 are independent with each other.

An interface towards the Connection Controller 750 may also be added in the Route Controller 710 for triggering the Connection Controller 750, and then the Connection Controller 750 switches the service from the protection path to the working path, delete the protection path or delete the connections of the restoration path which is separate from the working path.

In the embodiments of the present invention, other modules of the ASON network node are the same as that of the conventional ASON network node, and no further description is given.

In the solution of the embodiment of the present invention, the service switching is triggered according to the change in topology of the network. Therefore, the spread of alarm messages is curbed. Moreover, the revertive processing is implemented when part of sources is shared by a protection path and an original working path, and the embodiments of the present invention may implement the revertive processing of various protection modes.

The above is only preferred embodiments of the present invention and is not for use in limiting the present invention. Any modification, equivalent replacement or improvement made under the principles of the present invention shall be included in the protection scope of the present invention.

## Claims

1. A method for switching a service, comprising:
switching a service to a protection path when a working path corresponding to the service in an Automatic Switched Optical Network, ASON fails;
determining whether the working path is restored when an end node of the service detects a change of topology in the network; and
switching the service from the protection path back to the working path when the working path is restored; **characterized by**
wherein detecting the change in the topology of the network comprises;
updating a Routing message Data Base, RDB, on receipt of flooding information of the Open Shortest Path First-Traffic Engineering, OSPF-TE, protocol; and
determining that the topology of the network changes when contents of the RDB change.

2. The method of Claim 1, wherein the end node of the service is the head node or the tail node of the working path.

3. The method of Claim 1, further comprising:
deleting connections of the protection path after switching the service from the protection path back to the working path, the connections being separate from the working path.

4. The method of Claim 1, further comprising:
establishing a restoration path after switching the service to the protection path, the end nodes of the restoration path being the end nodes of the working path.

5. The method of Claim 4, further comprising:
deleting connections of the restoration path after switching the service from the protection path back to the working path, the connections being separate from the working path.

6. The method of Claim 1, further comprising:
starting a timer when the working path is restored;
determining whether the working path fails again before the timer expires; wherein
the service is switched from the protection path back to the working path when the timer expires, if the working path does not fail.

7. The method of Claim 6, wherein the duration of the timer is Wait To Restore, WTR, time.

8. A network node for switching a service, comprising:
a path testing unit (711), configured to determine whether a working path in a network is restored after a change in topology of the network is detected by a link resource manager (730); and to send a signal if the working path is restored; the network node being an end node of the working path;
a route controller (710), configured to send a trigger signal according to the signal from the path testing unit (711); and
a connection controller(750), configured to switch the service from the protecting path back to the working path according to the trigger signal from the route controller (710); **characterized in that** the link resource manager (730), configured to detect the change in the topology of a network by updating a Routing message Data Base, RDB, on receipt of flooding information of the Open Shortest Path First-Traffic Engineering, OSPF-TE, protocol and to determine that the topology of the network changes when contents of the RDB change ;

9. The network node of Claim 8, further comprising:
a timer (712); wherein
the path testing unit (711) is further configured to start the timer (712) before sending the signal, determine whether the working path fails again before the timer (712) expires, and send the signal when the timer (712) expires, if the working path does not fail.

10. The network node of Claim 9, wherein at least one of the path testing unit (711) and the timer (712) is located at the route controller.

11. The network node of any of Claims 8 to 10, wherein the network node is a network node of an Automatically Switched Optical Network, ASON.

## Patentansprüche

1. Verfahren zum Umschalten eines Dienstes, umfassend:
Umschalten eines Dienstes auf einen Schutzpfad, wenn ein Arbeitspfad, der dem Dienst in einem automatisch vermittelten optischen Netzwerk ASON entspricht, ausfällt;
Bestimmen, ob der Arbeitspfad wiederhergestellt ist, wenn ein Endknoten des Dienstes eine Änderung der Topologie in dem Netzwerk detektiert; und
Zurückschalten des Dienstes von dem Schutzpfad auf den Arbeitspfad, wenn der Arbeitspfad wiederhergestellt ist; **dadurch gekennzeichnet, dass**
das Detektieren der Änderung der Topologie des Netzwerks Folgendes umfasst:
Aktualisieren einer Routing Message Data Base RDB beim Empfang von Flooding-Informationen des Protokolls des Open Shortest Path First-Traffic Engineering OSPF-TE; und
Bestimmen, dass sich die Topologie des Netzwerks ändert, wenn sich Inhalte der RDB ändern.

2. Verfahren nach Anspruch 1, wobei der Endknoten des Dienstes der vorderste Knoten oder der hinterste Knoten des Arbeitspfads ist.

3. Verfahren nach Anspruch 1, ferner umfassend:
Löschen von Verbindungen des Schutzpfads nach dem Zurückschalten des Dienstes von dem Schutzpfad auf den Arbeitspfad, wobei die Verbindungen von dem Arbeitspfad getrennt sind.

4. Verfahren nach Anspruch 1, ferner umfassend:
Herstellen eines Wiederherstellungspfads nach dem Umschalten des Dienstes auf den Schutzpfad, wobei die Endknoten des Wiederherstellungspfads die Endknoten des Arbeitspfads sind.

5. Verfahren nach Anspruch 4, ferner umfassend:
Löschen von Verbindungen des Wiederherstellungspfads nach dem Zurückschalten des Dienstes von dem Schutzpfad auf den Arbeitspfad, wobei die Verbindungen von dem Arbeitspfad getrennt sind.

6. Verfahren nach Anspruch 1, ferner umfassend:
Starten eines Timers, wenn der Arbeitspfad wiederhergestellt ist;
Bestimmen, ob der Arbeitspfad wieder ausfällt, bevor der Timer abläuft; wobei der Dienst von dem Schutzpfad auf den Arbeitspfad zurückgeschaltet wird, wenn der Timer abläuft, wenn der Arbeitspfad nicht ausfällt.

7. Verfahren nach Anspruch 6, wobei die Dauer des Timers die Wait-To-Restore- bzw. WTR-Zeit ist.

8. Netzwerkknoten zum Umschalten eines Dienstes, umfassend:
eine Pfadprüfeinheit (711), die dafür ausgelegt ist, zu bestimmen, ob ein Arbeitspfad in einem Netzwerk wiederhergestellt ist, nachdem eine Änderung der Topologie des Netzwerks durch einen Streckenbetriebsmittelmanager (730) detektiert wird; und ein Signal zu senden, wenn der Arbeitspfad wiederhergestellt ist; wobei der Netzwerkknoten ein Endknoten des Arbeitspfads ist;
eine Routensteuerung (710), die dafür ausgelegt ist, gemäß dem Signal von der Pfadprüfeinheit (711) ein Triggersignal zu senden; und
eine Verbindungssteuerung (750), die dafür ausgelegt ist, den Dienst gemäß dem Triggersignal von der Routensteuerung (710) von dem Schutzpfad auf den Arbeitspfad zurückzuschalten; **dadurch gekennzeichnet, dass**
der Streckenbetriebsmittelmanager (730) dafür ausgelegt ist, die Änderung der Topologie eines Netzwerks durch Aktualisieren einer Routing Message Data Base RDB beim Empfang von Flooding-Informationen des Protokolls des Open Shortest Path First-Traffic Engineering OSPF-TE zu detektieren und zu bestimmen, dass sich die Topologie des Netzwerks ändert, wenn sich Inhalte der RDB ändern.

9. Netzwerkknoten nach Anspruch 8, ferner umfassend:
einen Timer (712); wobei
die Pfadprüfeinheit (711) ferner dafür ausgelegt ist, den Timer (712) vor dem Senden des Signals zu starten, zu bestimmen, ob der Arbeitspfad wieder ausfällt, bevor der Timer (712) abläuft, und das Signal zu senden, wenn der Timer (712) abläuft, wenn der Arbeitspfad nicht ausfällt.

10. Netzwerkknoten nach Anspruch 9, wobei sich die Pfadprüfeinheit (711) und/oder der Timer (712) in der Routensteuerung befinden.

11. Netzwerkknoten nach einem der Ansprüche 8 bis 10, wobei der Netzwerkknoten ein Netzwerkknoten eines automatisch vermittelten optischen Netzwerks ASON ist.

## Revendications

1. Procédé de commutation d'un service, comprenant :
le basculement d'un service sur un chemin de protection quand un chemin de travail correspondant au service dans un Réseau Optique Commuté Automatique, ASON, est défaillant ;
la détermination que le chemin de travail est ou non rétabli quand un noeud d'extrémité du service détecte un changement de topologie dans le réseau ; et
le rebasculement du service du chemin de protection sur le chemin de travail quand le chemin de travail est rétabli ; **caractérisé en ce que**
la détection du changement de topologie du réseau comprend :
l'actualisation d'une Base de Données de message de Routage, RDB, à la réception d'informations de dissémination en masse du protocole OSPF-TE (Open Shortest Path First-Traffic Engineering) ; et
la détermination que la topologie du réseau change quand le contenu de la RDB change.

2. Procédé selon la revendication 1, dans lequel le noeud d'extrémité du service est le noeud de tête ou le noeud de queue du chemin de travail.

3. Procédé selon la revendication 1, comprenant en outre :
la suppression de connexions du chemin de protection après le rebasculement du service du chemin de protection sur le chemin de travail, les connexions étant séparées du chemin de travail.

4. Procédé selon la revendication 1, comprenant en outre :
l'établissement d'un chemin de rétablissement après le basculement du service sur le chemin de protection, les noeuds d'extrémité du chemin de rétablissement étant les noeuds d'extrémité du chemin de travail.

5. Procédé selon la revendication 4, comprenant en outre :
la suppression de connexions du chemin de rétablissement après le rebasculement du service du chemin de protection sur le chemin de travail, les connexions étant séparées du chemin de travail.

6. Procédé selon la revendication 1, comprenant en outre :
le lancement d'une temporisation quand le chemin de travail est rétabli ;
la détermination que le chemin de travail est ou non défaillant à nouveau avant l'expiration de la temporisation ; dans lequel
le service est rebasculé du chemin de protection sur le chemin de travail quand la temporisation expire, si le chemin de travail n'est pas défaillant.

7. Procédé selon la revendication 6, dans lequel la durée de la temporisation est un temps WTR d'Attente de Rétablissement.

8. Noeud de réseau destiné à la commutation d'un service, comprenant :
une unité de test de chemin (711), configurée pour déterminer qu'un chemin de travail dans un réseau est ou non rétabli après qu'un changement de topologie du réseau a été détecté par un gestionnaire de ressources de liaison (730) ; et envoyer un signal si le chemin de travail est rétabli ; le noeud de réseau étant un noeud d'extrémité du chemin de travail ;
un contrôleur de route (710) configuré pour envoyer un signal de déclenchement en fonction du signal provenant de l'unité de test de chemin (711) ; et
un contrôleur de connexions (750), configuré pour rebasculer le service du chemin de protection sur le chemin de travail en fonction du signal de déclenchement provenant du contrôleur de route (710) ; **caractérisé en ce que**
le gestionnaire de ressources de liaison (730) est configuré pour détecter le changement de topologie d'un réseau en actualisant une Base de Données de message de Routage, RDB, à la réception d'informations de dissémination en masse du protocole OSPF-TE (Open Shortest Path First-Traffic Engineering) ; et déterminer que la topologie du réseau change quand le contenu de la RDB change.

9. Noeud de réseau selon la revendication 8, comprenant en outre :
une temporisation (712), dans lequel
l'unité de test de chemin (711) est configurée en outre pour lancer la temporisation (712) avant d'envoyer le signal, déterminer que le chemin de travail est ou non défaillant à nouveau avant l'expiration de la temporisation (712), et envoyer le signal quand la temporisation (712) expire, si le chemin de travail n'est pas défaillant.

10. Noeud de réseau selon la revendication 9, dans lequel au moins l'une de l'unité de test de chemin (711) et de la temporisation (712) est située au niveau du contrôleur de route.

11. Noeud de réseau selon l'une quelconque des revendications 8 à 10, dans lequel le noeud de réseau est un noeud de réseau d'un Réseau Optique Commuté Automatique, ASON.
